(19) Europäisches Patentamt
European Patent Office
Office européen des brevets

(11) Veröffentlichungsnummer: **0 301 268 B1**

# (12) EUROPÄISCHE PATENTSCHRIFT

(45) Veröffentlichungstag der Patentschrift: **24.11.93**

(51) Int. Cl.5: **C08G 59/16**

(21) Anmeldenummer: **88110598.5**

(22) Anmeldetag: **02.07.88**

## (54) Verfahren zur Herstellung von Vinylesterharzen in Vinylmonomerenlösung.

(30) Priorität: **14.07.87 DE 3723196**

(43) Veröffentlichungstag der Anmeldung:
**01.02.89 Patentblatt 89/05**

(45) Bekanntmachung des Hinweises auf die Patenterteilung:
**24.11.93 Patentblatt 93/47**

(84) Benannte Vertragsstaaten:
**AT DE ES FR GB IT NL SE**

(56) Entgegenhaltungen:
**FR-A- 2 144 802**
**US-A- 3 301 743**
**US-A- 4 303 576**

**CHEMICAL ABSTRACTS, Band 79, Nr. 14, 8. Oktober 1973, Seite 54, Zusammenfassung Nr. 79858y, Columbus, Ohio, US; & JP-A-73 29 887**

**CHEMICAL ABSTRACTS, Band 90, Nr. 4, Januar 1979, Seite 15, Zusammenfassung Nr. 23938j, Columbus, Ohio, US; N. TADATOMI: "Studies of photopolymer. XIV. Synthesis of diacrylate by addition reaction between epoxy resin and acrylic acid in the presence of polyfunctional acrylates", & KOBUNSHI-RONBUNSHU 1978, 35(10), 673-5**

(73) Patentinhaber: **DSM N.V.**
**Het Overloon 1**
**NL-6411 TE Heerlen(NL)**

(72) Erfinder: **Hess, Bernhard, Dr.**
**Kaldenhausener Strasse 84**
**D-4130 Moers(DE)**
Erfinder: **Klöker, Werner, Prof. Dr.**
**Deswatinesstrasse 26**
**D-4150 Krefeld 1(DE)**
Erfinder: **Brassat, Bert, Dr.**
**Bodelschwinghstrasse 30**
**D-4150 Krefeld 1(DE)**
Erfinder: **Uerdingen, Walter, Dr.**
**Humperdinckstrasse 41**
**D-5090 Leverkusen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

Die Erfindung betrifft ein neues Verfahren zur Herstellung von Vinylesterharzen durch Umsetzung von Epoxidharzen mit ungesättigten Carbonsäuren in Lösungen von Vinylmonomeren.

Vinylesterharze können z.B. durch Umsetzung eines Epoxidharzes mit Acryl- oder Methacrylsäure in Gegenwart eines Katalysators in einer Schmelze hergestellt werden. Die Schmelze kann anschließend in Vinylmonomeren gelöst werden (z.B. DE-OS 35 28 461, EP-OS 156 959).

Die Herstellung von Vinylesterharzen ist kritisch, da die Umsetzungslösung sehr reaktionsfähig ist und durch unkontrollierbaren Verlauf Gelierung eintreten kann. Daher wird das Vinylmonomere, z.B. Styrol, erst dem fertigen Vinylesterharz als copolymerisationsfähiges Lösungsmittel zugesetzt.

Besonders leicht gelieren die Umsetzungslösungen, wenn bei der Herstellung von Vinylesterharzen oligomere Epoxidharze eingesetzt werden, die eine hohe Schmelzviskosität aufweisen. Jedoch zeigen gerade solche schwer herzustellenden Vinylesterharze aus oligomeren Epoxidharzen im gehärteten Zustand mechanisch und hydrolytisch hochwertige Eigenschaften.

Da bereits die Herstellung der Vinylesterharze schwierig ist, wurde die weitere copolymerisationsfähige Komponente, das Vinylmonomere, erst dem fertigen Phenacrylatharz zugesetzt, um nicht die Neigung zur vorzeitigen Gelierung noch zu erhöhen.

Es besteht daher ein Vorurteil, oligomere Epoxidharze z.B. mit (Meth)acrylsäure in Gegenwart einer weiteren, zur Copolymerisation fähigen Vinylverbindung, z.B. Styrol, herzustellen.

Es wurde nun gefunden, daß Vinylesterharze aus Epoxidharzen und ungesättigten Carbonsäuren bereits in einer Lösung von Vinylmonomeren (d.h. die Vinylverbindung dient auch als Lösungsmittel) in Gegenwart von Katalysatoren hergestellt werden können.

Gegenstand der Erfindung ist daher ein Verfahren zur Herstellung von Vinylesterharzen durch Umsetzung eines Epoxidharzes mit ungesättigten Carbonsäuren unter Verwendung von entweder Ammmoniumsalz, Phosphoniumsalz oder Phosphin als Katalysator in einer Vinylmonomerlösung, dadurch gekennzeichnet, daß das gegebenenfalls saure Vinylesterharz durch Umsatz mit einem Polyisocyanat kettenverlängert wird.

Ein weiterer Gegenstand der Erfindung ist ein Verfahren zur Herstellung von Vinylesterharzen durch Umsetzung eines Oxazolidongruppen enthaltende Epoxidharzes mit ungesättigten Carbonsäuren unter Verwendung von einem Katalysator, dadurch gekennzeichnet, daß die Umsetzung in einer Vinylmonomerlösung durchgeführt wird und daß als Katalysator Ammmoniumsalz, Phosphoniumsalz oder Phosphin verwendet wird.

Mit dem erfindungsgemäßen Verfahren lassen sich in einfachen Rührkesseln Vinylesterharze einfach, mit guter Lagerstabilität und mit niedrigen Viskositäten herstellen. Im gehärteten Zustand haben sie hohe mechanische Festigkeiten.

Die in einer Vinylmonomerenlösung hergestellten Vinylesterharze enthalten pro umgesetzter Epoxidgruppe jeweils eine OH-Gruppe, die für weitere Umsetzungen zur Verfügung steht. Die OH-Gruppen werden partiell mit einem Polyisocyanat zum Aufbau eines höheren Molekulargewichts umgesetzt und können mit einem Säureanhydrid unter Bildung eines sauren Halbesters aufgesäuert werden. Solche in Vinylmonomerenlösung aufgesäuerten Vinylesterharze können vorzugsweise mit einem Erdalkalioxid, z.B. MgO eingedickt und nach dem bekannten Harzmattenverfahren (SMC = sheet molding compound) zu Vorformlingen oder Preßmassen verarbeitet werden.

Die mit Polyisocyanaten kettenverlängerten sauren Vinylesterharze dicken auch mit wenigem Füllstoff in sehr kurzer Zeit ein und können zu Preßteilen mit hohen mechanischen Festigkeiten verarbeitet werden.

Die für das erfindungsgemäße Verfahren geeigneten Epoxidharze sind die üblichen Polyglycidylether von zweiwertigen Phenolen wie Bisphenol-A oder -F oder -Sulfonyl oder Thionyl-Bisphenol oder deren kernsubstituierte Derivate, Novolakpolyglycidylether oder Bisglycidylester der (Methyl)Hexa- oder Tetrahydrophthalsäure oder Anilinglycidylverbindungen.

Bevorzugt werden im erfindungsgemäßen Verfahren kettenverlängerte Epoxidharze eingesetzt, die durch Umsetzung eines Polyphenols, z.B. Bisphenol-A, mit einer Diglycidylverbindung, z.B. Bisphenol-A-bisglycidylether, hergestellt wurden.

Eine weitere bevorzugte Variante von Vinylesterharzen werden erhalten, wenn in dem erfindungsgemäßen Verfahren als oligomere Epoxidharze Oxazolidongruppen enthaltende Epoxidharze eingesetzt werden, die gemäß der Deutschen Patentanmeldung 3 720 759 hergestellt werden können. Nach Umsatz dieser mit Methacrylsäure in styrolischer Lösung stellen diese auch in der aufgesäuerten Form wervolle Vinylesterharze dar, die sich durch hohe mechanische Festigkeiten verbunden mit hoher Wärmeformbeständigkeit und Hydrolysenfestigkeit im gehärteten Zustand auszeichnen.

Weiterhin können bekannte oligomere Epoxidharze verwendet werden (z.B. EP-OS 91 883, 99 334 u.a.).

Als ungesättigte Carbonsäuren sind ethylenisch ungesättigte Carbonsäuren, z.B. Methacrylsäure, Acrylsäure, Zimtsäure sowie Halbester aus einer Dicarbonsäure und einem ungesättigten Hydroxyalkylcarbonsäureester geeignet. Bevorzugt ist Acrylsäure und Methacrylsäure.

Die Epoxidharze und ungesättigten Carbonsäuren werden bevorzugt in etwa stöchiometrischen Verhältnissen eingesetzt, d. h. pro Epoxidäquivalent des Harzes wird etwa ein Äquivalent Carbonsäure eingesetzt.

Als Vinylmonomere können solche eingesetzt werden, die gegenüber Epoxidgruppen unter den Umsetzungsbedingungen inert sind, z.B. Styrol, kernchlorierte und -alkylierte bzw. -alkenylierte Styrole, wobei die Alkylgruppen 1 bis 4 C-Atome enthalten können wie Vinyltoluol, Divinylbenzol, α-Methylstyrol, tert.-Butylstyrol, Chlorstyrole, Vinylester von Carbonsäuren mit 2 bis 6 C-Atomen, bevorzugt Vinylacetat, Vinylpyridin, Vinylnaphthalin, Vinylcyclohexan, Acryl- und Methacrylsäureester ohne funktionelle Gruppen, Allylverbindungen wie Allylbenzol und Allylester wie Allylacetat, Phthalsäurediallylester, Isophthalsäurediallylester, Allylcarbonate, Triallylphosphonat, Triallylcyanurat. Bevorzugt ist Styrol.

Die Mengen an eingesetzten Vinylmonomeren soll mindestens 5 Gew.-% (bezogen auf sämtliche Komponenten) betragen, bevorzugt 10 bis 50 Gew.-%, besonders bevorzugt 15 bis 40 Gew.-%.

Zum fertigen Vinylester können je nach Bedarf und Verarbeitungsrezeptur noch weitere Mengen Vinylmonomere zugesetzt werden, die auch funktionelle Gruppen enthalten können.

Als Katalysatoren sind geeignet quarternäre Ammoniumsalze wie Halogenide, Acetate oder Formiate, vorzugsweise Halogenide der Formel (I)

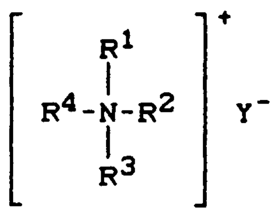 (I),

worin

R[1], R[2] und R[3] unabhängig voneinander unsubstituierte oder gegebenenfalls durch OH-Gruppen substituierte Alkylgruppen mit 1 bis 16 C-Atomen und

R[4] Alkyl mit 1 bis 16 C-Atomen, Phenyl oder Benzyl bedeutet und

Y Halogen wie F, Cl, Br, J, Acetat oder Formiat bedeutet.

Solche Katalysatoren werden z.B. in der GB-PS 1 364 804 beschrieben. Bevorzugt werden Tetraethyl- und Tetrabutylammonium-bromid oder -chlorid und Triethylbenzylammonium-chlorid oder -bromid.

Als Katalysatoren sind geeignet Phosphoniumhalogenide der Formel (II)

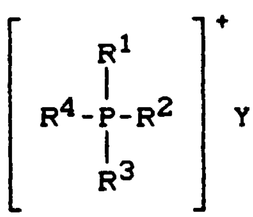 (II),

worin

Y Halogen, wie Chlor, Brom, Iod oder Acetat ist und

R[1], R[2], R[3] und R[4] unabhängig voneinander $C_1$-$C_{18}$-gruppen sind, vorzugsweise $C_1$-$C_{18}$-Alkyl-, $C_5$-$C_{10}$-Cycloalkyl-, $C_1$-$C_{14}$-Aryl-, $C_7$-$C_{24}$-Alkaryl- und $C_7$-$C_{24}$-Arylalkylgruppen mit jeweils höchstens 18 C-Atomen, bevorzugt 1 bis 8 C-Atomen.

Geeignete Phosphoniumsalze sind z.B. in der EP-OS 99 334 beschrieben. Beispiele für besonders bevorzugte Phosphoniumverbindungen sind Tetrabutylphosphonium-bromid oder -chlorid oder Triphenylbenzylphosphonium-chlorid oder -bromid.

Als Katalysatoren sind geeignet Phosphine der allgemeinen Formel (III)

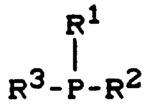

(III)

in der

$R^1$, $R^2$ und $R^3$ unabhängig voneinander $C_6$-$C_{14}$-Aryl- oder $C_7$-$C_{24}$-Alkaryl- oder Halogen-(z.B. Cl, Br)-substituierte $C_6$-$C_{14}$-Arylgruppen sind.

Bevorzugt wird Triphenylphosphin verwendet.

Die eingesetzten Mengen der Katalysatoren, die auch miteinander kombiniert werden können, betragen 0,0005 bis 5 Gew.-%, bevorzugt 0,001 bis 2 Gew.-%, bezogen auf das Gewicht sämtlicher Komponenten.

Das Verfahren wird in der Regel bei einer Temperatur im Bereich von 80 bis 130 °C, bevorzugt von 90 bis 120 °C, durchgeführt.

Zur Aufsäuerung (Umsetzung mit Säureanhydriden zu sauren Halbestern) der gebildeten Vinylesterharzlösung in Vinylmonomeren geeignete Säureanhydride sind vorzugsweise die Anhydride der Bernsteinsäure, Phthalsäure, Tetrahydrophthalsäure, Methyltetrahydrophthalsäure, Hexahydrophthalsäure, Methylhexahydrophthalsäure, Endomethylentetra- oder -hexahydrophthalsäure, Hexachlorendomethylentetrahydrophthalsäure, usw.; bevorzugt werden die Anhydride der (Methyl)Tetra- oder (Methyl)Hexahydrophthalsäure.

Die Menge an Säureanhydrid soll so bemessen sein, daß sich für das aufgesäuerte Vinylesterharz eine Säurezahl von 15 bis 80, bevorzugt 30 bis 60 bestimmen (z.B. errechnen oder titrieren) läßt.

Die zum Aufbau eines höheren Molekulargewichts geeigneten Polyisocyanate sind die üblichen aromatischen, aliphatischen oder cycloaliphatischen Diisocyanate wie die Isomeren des Toluylendiisocyanats, Diphenylmethandiisocyanats, Naphthylendiisocyanats; Isophorondiisocyanat, hydriertes Diphenylmethandiisocyanat, hexamethylendiisocyanat oder Polyisocyanate wie z.B. das Addukt von 3 Mol Toluylendiisocyanat an 1 Mol Trimethylolpropan usw..

Die Mengen der zum Molekulargewichtsaufbau benutzten Polyisocyanate ist durch den Gelierpunkt des Harzsystems begrenzt und muß experimentell ermittelt werden, wobei von trifunktionellen Polyisocyanaten vorzugsweise geringere Mengen eingesetzt werden als von difunktionellen.

Der Umsatz der Polyisocyanate erfolgt zweckmäßigerweise bei Temperaturen von 10 bis 110 °C, bevorzugt bei 60 - 90 °C.

Der Molekulargewichtsaufbau mit Polyisocyanaten kann sowohl vor als auch nach der Aufsäuerung des Vinylesterharzes erfolgen. Je nach Reaktivität der vorhandenen OH- oder COOH-Gruppen entstehen hierbei im Harz Urethan- oder Carbonamidgruppen. Letztere können Thixotropie der Lösung bewirken, die in bestimmten Fällen vorteilhaft sein kann.

Bei dem erfindungsgemäßen Verfahren können die Umsetzungslösungen mit gebräuchlichen Inhibitoren versetzt werden, z.B. mit Benzochinon, Toluchinon, Naphthochinone, Trimethylchinon, Mono- und Ditert.-Butylchinon und/oder mit deren Hydrochinonen, vorzugsweise Hydrochinon, Toluhydrochinon, 1,4-Naphthohydrochinon, mit Brenzcatechinen -vorzugsweise mono- und/oder di.-tert.-Butyl-brenzcatechinen - sowie deren Mono-alkylethern, mit Chloranil und löslichen Kupfersalzen und/oder -Komplexen, z.B. Kupfernaphthenat, -octoat, -acetylacetonat, mit Kupfer(I)chlorid-phosphit-Komplexen, sowie mit Gemischen der genannten Verbindungen.

Das erfindungsgemäße Verfahren kann wie folgt durchgeführt werden:
Das Epoxidharz wird in Styrol, das Inhbitoren enthält, gelöst und bei 110 °C mit Methacrylsäure umgesetzt. Die Lösung kann durch Zugabe eines Säureanhydrids bei 100 °C aufgesäuert und danach mit einem Diisocyanat bei 80 °C kettenverlängert werden oder Zuerst mit Diisocyanat bei 80 °C kettenverlängert und danach durch Zugabe eines Säureanhydris aufgesäuert werden.

<u>Beispiele</u>

Es werden folgende Abkürzungen im Text verwendet: X20 : Bisphenol-A-bisglycidylether, techn. (Epoxidäquivalentgewicht: 190)

BPA : Bisphenol A

MAS : Methacrylsäure, (99 %ig)

Katalysator

| | |
|---|---|
| A | : Triethylbenzylammoniumchlorid |
| B | : Tetraethylammoniumbromid |
| C | : Tetrabutylammoniumbromid |
| D | : Benzyltriphenylphosphoniumchlorid |
| E | : Tetrabutylphosphoniumbromid |
| F | : Triphenylphosphin |
| G* | : Dimethylbenzylamin |
| H* | : Lithiumchlorid |

Reaktionszeit: Über die Säurezahl ermittelte Stundenzahl bei 110 °C bis der Gehalt an MAS auf <1 % gesunken ist, bezogen auf sämtliche Komponenten ohne Styrol.

Cu-Lösung: Kupfernaphthenat, 10 %ige Lösung in Styrol, enthaltend 1 % Cu.

Die in den Tabellen angegebenen Mengen sind Gewichtsteile.

## Herstellung der Vorstufen 1 bis 6 und Vergleichsprodukte V1 und V2

Die in der Tabelle 1 jeweils aufgeführten Gew.-Teile Epoxidharz X20 werden in einen Kolben mit Rührer und Gaseinleitungsrohr eingewogen (Ausnahme V1) und in Styrol, das die aufgeführten Gew.-Teile Inhibitoren enthält, gelöst. Zu der Lösung wird die entsprechende Katalysatormenge zugegeben und unter Rühren und Luftdurchleiten auf 110 °C erwärmt. Innerhalb von ca. 15 Minuten wird die MAS zugetropft und die Lösung bei 110 °C gehalten bis der MAS-Gehalt auf <1 %, bezogen auf sämtliche Komponenten ohne Styrol, gesunken ist. Bei V1 wird unter Weglassen des Styrols analog verfahren.

## Herstellung der Vorstufen 7 bis 9

Bei diesen Vorstufen werden die tabellarisch aufgeführten Epoxidharzmengen und der jeweilige Katalysator in den Rührkolben eingewogen und unter Stickstoff auf 130 °C geheizt. Bei dieser Temperatur wird unter Rühren portionsweise in ca. 30 Minuten BPA zugegeben und die Temperatur ca. 3 Stunden gehalten. Nach dieser Zeit ist der Epoxidwert auf den berechneten Wert abgesunken und kein phenolisches OH mehr vorhanden. Die Schmelze wird auf 110 °C abgekühlt und in Styrol, das die aufgeführten Inhibitormengen enthält, unter Luftdurchleiten gelöst und der Ansatz wie oben beschrieben weiter mit MAS umgesetzt.

## Herstellung der Varianten 1A bis 9A

Die aufgesäuerten Varianten der Vorstufen 1 bis 9 werden mit 1A bis 9A bezeichnet. Sie werden folgendermaßen hergestellt:
Zu jeweils 100 Gew.-Teilen der Losungen der Vorstufen 1 bis 9, die 20 Gew.-Teile Styrol enthalten, werden 8,67 Gew.-Teile Tetrahydrophthalsäureanhydrid zugegeben und die Lösungen unter Rühren und Luftdurchleiten 1 Stunde auf 100 °C geheizt. Die auf Raumtemperatur abgekühlten Lösungen zeigen eine Säurezahl von 35. ( Beispiele 1A bis 9A). Die Lösungen der Varianten 7A bis 9A werden wegen ihrer hohen Viscosität vor der Weiterverarbeitung zweckmäßigerweise mit weiterem Styrol auf insgesamt 45 Gew.-% Styrol verdünnt. Die Lösungen sind mit MgO eindickbar und können zu Harzmatten (SMC) oder Preßmassen (BMC) verarbeitet werden.

## Herstellung der erfindungsgemäßen Produkte 1B bis 9B

Die mit Diisocyanat kettenverlängerten Varianten 1A bis 9A werden mit 1B bis 9B bezeichnet.

Die styrolischen Lösungen der Varianten 1A bis 9A werden mit weiterem Styrol auf insgesamt 45 Gew.-% Styrol verdünnt. Zu jeweils 100 Gew.-Tl. dieser Lösung werden jeweils 2 Gew.-Tl. Toluylendiisocyanat-2,4 zugegeben. Nach 1/2 Std. bei 70 °C ist kein reaktives Isocyanat mehr nachweisbar. Die Lösungen werden auf Raumtemperatur abgekühlt (Produkte 1B bis 9B). Die Viscosität der Produkte 1B bis 9B hat sich nach dem Umsatz mit Diisocyanat gegenüber den Varianten 1A bis 9A jeweils verdreifacht. Die Lösungen sind in Füllstoff-armen Rezepturen besonders schnell mit MgO eindickbar.

* zu Vergleichszwecken eingesetzt.

**Tabelle I**

| Vorstufen und Vergleich | 1 | 2 | 3 | 4 | 5 | 6 | V1 | V2 | 7 | 8 | 9 |
|---|---|---|---|---|---|---|---|---|---|---|---|
| **X20** | 100 | 100 | 100 | 100 | 100 | 100 | 100 | 100 | 100 | 100 | 100 |
| **BPA** | - | - | - | - | - | - | - | - | 30 | 30 | 30 |
| **Katalysator:** | | | | | | | | | | | |
| **A** | 0,75 | - | - | - | - | - | - | - | 0,75 | - | - |
| **B** | - | 0,75 | - | - | - | - | - | - | - | 0,75 | - |
| **C** | - | - | 0,75 | - | - | - | - | - | - | - | - |
| **D** | - | - | - | 0,75 | - | - | - | - | - | - | 0,75 |
| **E** | - | - | - | - | 0,75 | - | - | - | - | - | - |
| **F** | - | - | - | - | - | 1,0 | - | - | - | - | - |
| **G*** | - | - | - | - | - | - | 0,75 | 0,75 | - | - | - |
| **H*** | - | - | - | - | - | - | - | 2,5 | - | - | - |
| **Styrol** | 36,5 | 36,5 | 36,5 | 36,5 | 36,5 | 36,5 | | 36,5 | 38 | 38 | 38 |
| **Toluhydrochinon** | 0,036 | 0,036 | 0,036 | 0,036 | 0,036 | 0,036 | 0,036 | 0,036 | 0,038 | 0,038 | 0,038 |
| **Di-tert.-butylchinon** | 0,036 | 0,036 | 0,036 | 0,036 | 0,036 | 0,036 | 0,036 | 0,036 | 0,038 | 0,038 | 0,038 |
| **Cu-Lösung** | 0,36 | 0,36 | 0,36 | 0,36 | 0,36 | 0,36 | 0,36 | 0,36 | 0,38 | 0,38 | 0,38 |
| **Methacrylsäure** | 45,2 | 45,2 | 45,2 | 45,2 | 45,2 | 45,2 | 45,2 | 45,2 | 22,0 | 22,0 | 22,0 |
| **Reaktionszeit (Std.)** | 5 | 4 | 7 | 7 | 8 | 5 | 2 | 5 | 5 | 4 | 7 |
| **Viskosität ($20^{\circ}C$) mPas** | 3000 | 3500 | 3800 | 3600 | 3500 | 4000 | ge-liert | Gel-teile | 500x $10^3$ | 500x $10^3$ | 500x $10^3$ |

* zu Vergleichszwecken eingesetzt

Herstellung von Oxazolidongruppen enthaltenden Vinylesterharzen

Beispiel 10

503 g eines in der Deutschen Patentanmeldung 3 720 759 Beispiel 1 beschriebenen Oxazolidonepoxidharzes aus 1 Mol Diphenylmethandiisocyanat-Isomerengemisch und 2 Mol Bisphenol-A-bisglycidylether mit einem Epoxidäquivalentgewicht von 503 werden, wie im Beispiel 1 beschrieben, in stabilisiertem Styrol (30 Gew.-%) gelöst und mit 86 g Methacrylsäure umgesetzt. Die fertige Vinylesterlösung zeigte nach weiterem Verdünnen mit Styrol (insgesamt 40 Gew.-%) eine Viskosität von 5700 mPas bei 20 °C und eine Restsäurezahl von 5. Die Lösung stellt Beispiel 10 dar.

Beispiel 11

Wie in obigem Beispiel beschrieben werden 460 g eines in der Deutschen Patentanmeldung 3 720 759, Beispiel 3, beschriebenen Oxazolidonepoxidharzes aus 1 Mol Toluylendiisocyanat und 2 Mol Bisphenol-A-.bisglycidylether mit einem Epoxidäquivalentgewicht von 460 mit 81 g Methacrylsäure umgesetzt. Die fertige Vinylesterlösung zeigte mit einem Styrolgehalt von insgesamt 40 Gew.-% eine Viskosität von 12.000 mPas bei 20 °C und eine Restsäurezahl von 6. Die Lösung stellt das Beispiel 11 dar.

Beispiele 10A und 11A

Zur Herstellung der aufgesäuerten Varianten der Beispiele 10 und 11 werden jeweils 100 Gew.-Teile der jeweiligen Lösung mit 6,5 Gew.-Teilen Tetrahydrophthalsäureanhydrid versetzt und unter Luftdurchleiten 1 Std. auf 100 °C gehalten. Die auf Raumtemperatur abgekühlten Lösungen zeigen eine Säurezahl von 27. Sie stellen die Beispiele 10A und 11A dar. Die Lösungen sind mit MgO eindickbar und zu Harzmatten und Preßmassen verarbeitbar.

Die Lösungen sämtlicher Beispiele zeigen nach Heißhärtung mit 1 Gew.-% tert.-Butylperbenzoat bei 120 °C wertvolle mechanische Eigenschaften. In Tabelle II sind die mechanischen Wert von Beispiel 7, enthaltend 45 Gew.-% Styrol und der Beispiele 10 und 11, enthaltend 40 Gew.-% Styrol, zusammengestellt.

Tabelle II

| Beispiele | 7 | 10 | 11 |
|---|---|---|---|
| Biegefestigkeit (MPa) | 148 | 149 | 152 |
| Randfaserdehnung (%) | 6,2 | 6,3 | 5,2 |
| Reißfestigkeit (MPa) | 76 | 76 | 71 |
| E-Modul (MPa) | 3355 | 4428 | 3669 |
| Schlagzähigkeit (kJ/m$^2$) | 16 | 16 | 16 |
| Martensgrad (°C) | 100 | 121 | 119 |

Das erfindungsgemäße Verfahren zeigt seine Vorteile besonders deutlich beim Einsatz von oligomeren Epoxidharzen, die bei Raumtemperatur Festharze darstellen und deren Schmelzen bei 120 °C sehr hochviskos sind, so daß ein kontrollierter Umsatz mit Methacrylsäure in Schmelze nicht mehr möglich ist.

Herstellung der Oxazolidonepoxidharze gemäß Beispiel 1 und 3 der Deutschen Patentanmeldung 3 720 759.

Tabelle III

| Beispiel Nr. | Gew.-Teile | |
|---|---|---|
| | 1 | 3 |
| Bisphenol-A-bisglycidylether (X20) | 224,5 | 244,4 |
| Diphenylmethandiisocyanat-Isomerengemisch | 75,7 | - |
| Toluylendiisocyanat-2,4 | - | 55,6 |
| Tetrabutylphosphoniumbromid | 0,22 | 0,24 |

Herstellung der Oxazolidonepoxidharze:

Die in Tabelle III jeweils aufgeführten Gew.-Tle. an Bisexpidharzen und Katalysatoren werden in einen Kolben mit Rührer und Gaseinleitungsrohr eingewogen und unter Stickstoff auf 160 °C aufgeheizt. Zu der Schmelze wird das Diisocyanat so schnell zugetropft, daß eine Temperatur von etwa 170 °C eingehalten wird, was durch Abschalten der Heizung oder durch Kühlung gesteuert werden kann. Nach der Zugabe des gesamten Diisocyanats wird bei 160 °C nachgerührt bis der berechnete Epoxidwert erreicht und kein reaktives NCO mehr nachweisbar ist. Das erhaltene Produkt wird als Schmelze heiß abgefüllt. Es erstarrt beim Abkühlen.

## Patentansprüche

**1.** Verfahren zur Herstellung von Vinylesterharzen durch Umsetzung eines Epoxidharzes mit ungesättigten Carbonsäuren unter Verwendung von entweder Ammmoniumsalz, Phosphoniumsalz oder Phosphin als Katalysator in einer Vinylmonomerlösung, dadurch gekennzeichnet, daß das gegebenenfalls saure Vinylesterharz durch Umsatz mit einem Polyisocyanat kettenverlängert wird.

**2.** Verfahren nach Anspruch 1, dadurch gekennzeichnet, daß das kettenverlängerte Vinylesterharz mit einem Säureanhydrid unter Halbesterbildung umgesetzt wird.

**3.** Verfahren zur Herstellung von Vinylesterharzen durch Umsetzung eines Oxazolidongruppen enthaltende Epoxidharzes mit ungesättigten Carbonsäuren unter Verwendung von einem Katalysator, dadurch gekennzeichnet, daß die Umsetzung in einer Vinylmonomerlösung durchgeführt wird und daß als Katalysator Amnmoniumsalz, Phosphoniumsalz oder Phosphin verwendet wird.

**4.** Verfahren nach Anspruch 3, dadurch gekennzeichnet, daß nach der Umsetzung des Oxazolidongruppen enthaltenden Epoxidharzes in einer Vinylmonomerlösung das gebildete Vinylesterharz mit einem Säureanhydrid unter Halbesterbildung umgesetzt wird.

**5.** Verfahren zur Herstellung von Vinylesterharzen nach Anspruch 3 und 4, dadurch gekennzeichnet, daß das gegebenenfalls saure Vinylesterharz durch Umsatz mit einem Polyisocyanat kettenverlängert wird.

## Claims

**1.** A process for the production of vinyl ester resins by reaction of an epoxy resin with unsaturated carboxylic acids, using either ammonium salt, phosphonium salt or phosphine as catalyst in a vinyl monomer solution, characterized in that the optionally acid vinyl ester resin is chain-extended by reaction with a polyisocyanate.

**2.** A process according to Claim 1, characterized in that the chain-extended vinyl ester resin is reacted with an acid anhydride with formation of a half-ester.

**3.** A process for the production of vinyl ester resins by reaction of an epoxy resin containing oxazolidone groups with unsaturated carboxylic acids using a catalyst, characterized in that the reaction is carried out in a vinyl monomer solution and that ammonium salt, phosphonium salt or phosphine is used as catalyst.

**4.** A process according to Claim 3, characterized in that after the reaction of the epoxy resin containing oxazolidone groups in a vinyl monomer solution the vinyl ester resin formed is reacted with an acid anhydride with formation of a half-ester.

**5.** A process for the production of vinyl ester resins according to Claims 3 and 4, characterized in that the optionally acid vinyl ester resin is chain-extended by reaction with a polyisocyanate.

## Revendications

**1.** Procédé de préparation de résines d'esters vinyliques par réaction d'une résine époxydique avec des acides carboxyliques insaturés avec utilisation d'un catalyseur consistant en un sel d'ammonium, un sel

de phosphonium ou une phosphine dans une solution de monomère vinylique, caractérisé en ce que l'on soumet la résine d'ester vinylique éventuellement acide à allongement des chaînes par réaction avec un polyisocyanate.

**2.** Procédé selon revendication 1, caractérisé en ce que l'on fait réagir la résine d'ester vinylique, après allongement des chaînes, avec un anhydride d'acide, avec formation d'un hémi-ester.

**3.** Procédé de préparation de résines d'esters vinyliques par réaction d'une résine époxydique contenant des groupes oxazolidone avec des acides carboxyliques insaturés en présence d'un catalyseur, caractérisé en ce que la réaction est effectuée dans une solution de monomère vinylique et en ce que le catalyseur utilisé est un sel d'ammonium, un sel de phosphonium ou une phosphine.

**4.** Procédé selon revendication 3, caractérisé en ce que, après conversion de la résine époxydique contenant des groupes oxazolidone dans une solution de monomère vinylique, on fait réagir la résine d'ester vinylique formée avec un anhydride d'acide pour formation d'un hémi-ester.

**5.** Procédé de préparation de résines d'esters vinyliques selon revendications 3 et 4, caractérisé en ce que l'on soumet la résine d'ester vinylique, éventuellement acide, à allongement des chaînes par réaction avec un polyisocyanate.